# EUROPEAN PATENT APPLICATION

(11) **EP 2 845 811 A1**
(43) Date of publication of application: **11.03.2015**
(21) Application number: 13811339.4
(22) Date of filing: 30.08.2013
(51) Int. Cl.: B65B 33/02, H04M 1/02

(54) **FILM ADHERING DEVICE FOR TABLET ELECTRONIC EQUIPMENT**

(30) Priority: 04.07.2013 CN 201320395079 U
(71) Applicant: Liang, Steven, Shenzhen, Guangdong 518010 (CN)
(72) Inventor: Liang, Steven, Shenzhen, Guangdong 518010 (CN)
(74) Representative: Zenz Patentanwälte Partnerschaft mbB
(86) International application number: PCT/CN2013/082669
(87) International publication number: WO 2015/000215

(57) **Abstract**

The present invention relates to the tablet electronic equipment technical field, and provides a film sticking device for tablet electronic equipment includes a board defining an opening for being used to accommodation of a protection film, a recess portion is arranged on the board around the periphery of the opening, wherein the recess portion is snapping engaged with the periphery of the tablet electronic equipment so as to position the protection film on the surface of the electronic device to be stuck with the protection film Thus, a board is set, an opening being used to accommodation of a protection film is arranged on the board, and a recess portion is arranged on the periphery of the board, by snappingly the recess portion with the periphery of the tablet electronic equipment, the protection film can be positioned on the surface of the electronic device to be stuck with the film, which is simple structure, easy to locate, and makes the entire film sticking operation more easier, saves a lot of operating time and can be easily completed by the non-skilled.

## Description

### TECHNICAL FIELD

The present invention relates to the tablet electronic equipment technical field, and more particularly to a film sticking device for tablet electronic equipments.

### BACKGROUND

Today, tablet electronic equipments such as mobile phones, tablet PCs, have already become one of the most important communication equipment for people to read, however, in use, the screen and the back of the tablet electronic equipment is easily scratched, which may seriously affect the display effect and aesthetics of the tablet electronic equipment screen. Therefore, a protection film used for tablet electronic equipments appear, however, the existing protection film is torn from the whole slice and then aligned to the surface of the electronic device to be stuck with the protection film, but the non-skilled is hardly to grasp the film sticking skills well, and can not position the surface of the electronic device to be stuck with the protection film exactly, so there will be the problem, such as, complex film sticking process, failure of film sticking etc..

### SUMMARY

A technical problem solved by the present invention is to provide a film sticking device for tablet electronic equipments which aim to solve the problem that the non-skilled can not position the surface of the electronic device to be stuck with the protection film exactly, so there will be the problem, such as, complex film sticking process, failure of film sticking etc..

The present invention is realized as follow, a film sticking device for tablet electronic equipments include: a board defining an opening for being used to accommodation of a protection film, a recess portion is arranged on the board around the periphery of the opening, wherein the recess portion is snappingly engaged with the periphery of the tablet electronic equipment so as to position the protection film on the surface of the electronic device to be stuck with the protection film.

Specifically, the recess portion is of staircase structure.

Or, the recess portion is of bevel structure.

Further, a rib is projected from the board, and the rib surrounds the recess portion, and is used to clamp the periphery of the tablet electronic equipment.

Further, a gap is arranged on the rib corresponding to a button on the tablet electronic equipment.

Further, a height of the rib is smaller than a thickness of the tablet electronic device.

Further, the board is integrally formed with the rib.

Further, a width of at least one side of a side end on the board corresponding to the opening is greater than a width of other side of the opening.

In the present invention, a board is set, an opening being used to accommodation of a protection film is arranged on the board, and a recess portion is arranged on the periphery of the board, by snappingly the recess portion with the periphery of the tablet electronic equipment, the protection film can be positioned on the surface of the electronic device to be stuck with the film, which is simple structure, easy to locate, and makes the entire film sticking operation more easier, saves a lot of operating time and can be easily completed by the non-skilled.

### BRIEF DESCRIPTION OF THE DRAWINGS

FIG. 1 is a front view of a film sticking device for tablet electronic equipments in accordance with a first embodiment of the present invention;
FIG. 2 is a cross-sectional view of the FIG. 1 along a line of A-A;
FIG. 3 is an enlarged view of the circle C in the FIG. 2;
FIG. 4 is a cross-sectional view of the FIG. 1 along a line of B-B;
FIG. 5 is a rear view of the film sticking device for the tablet electronic equipment of FIG. 1;
FIG. 6 is a front perspective schematic view of the film sticking device for the tablet electronic equipment of FIG. 1;
FIG. 7 is a rear perspective schematic view of the film sticking device for the tablet electronic equipment of FIG. 1;
FIG. 8 is a front view of a film sticking device for the tablet electronic equipment in accordance with a second embodiment of the present invention;
FIG. 9 is a cross-sectional of the FIG. 8 along a line of D-D;
FIG. 10 is an enlarged view of the circle E in the FIG. 9;
FIG. 11 is a schematic diagram of the film sticking device for tablet the electronic equipment stuck with protection film of the present invention;
FIG. 12 is an enlarged view of the circle F in the FIG. 11.The realization, functional characteristics, advantages and embodiments of the present invention will be explained below in detail with reference to the accompanying drawings.

### DETAILED DESCRIPTION OF THE PREFERRED EMBODIMENTS

Objects, advantages and embodiments of the present invention will be explained below in detail with reference to the accompanying drawings and embodiments. However, it should be appreciated that the following description of the embodiment is merely exemplary in nature and is not intended to limit this present invention.

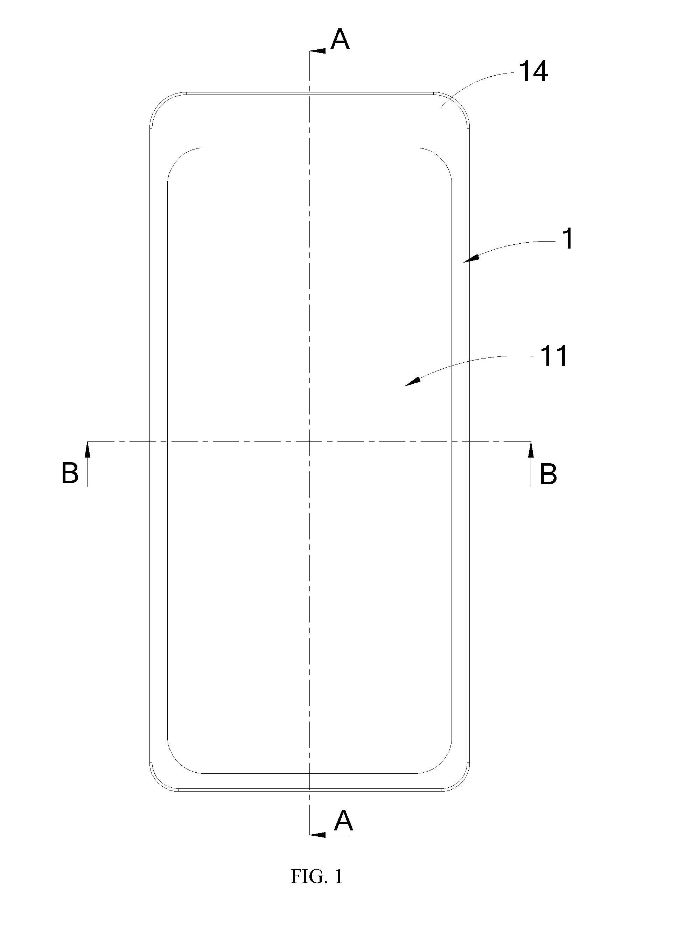

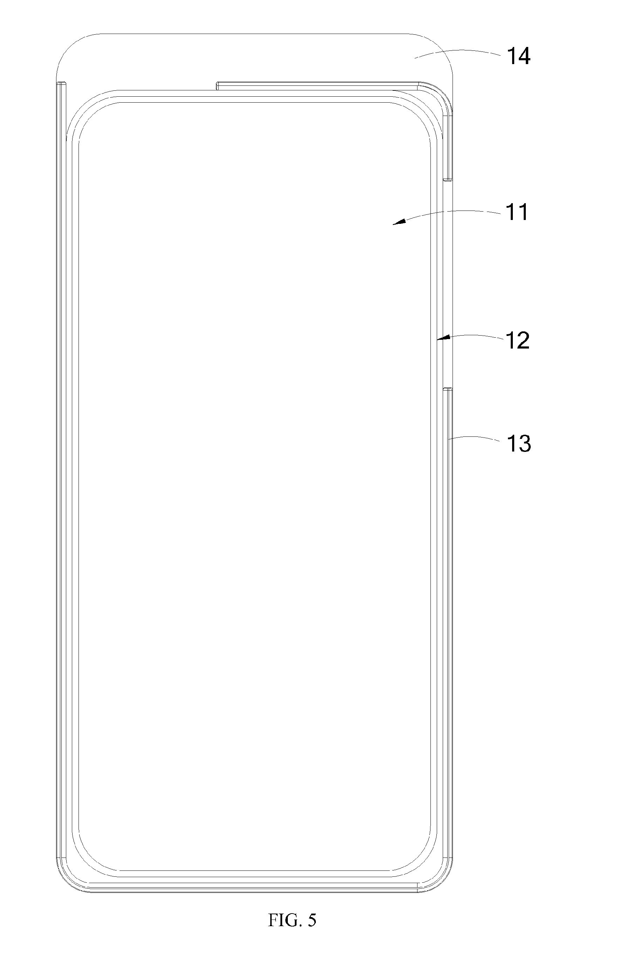

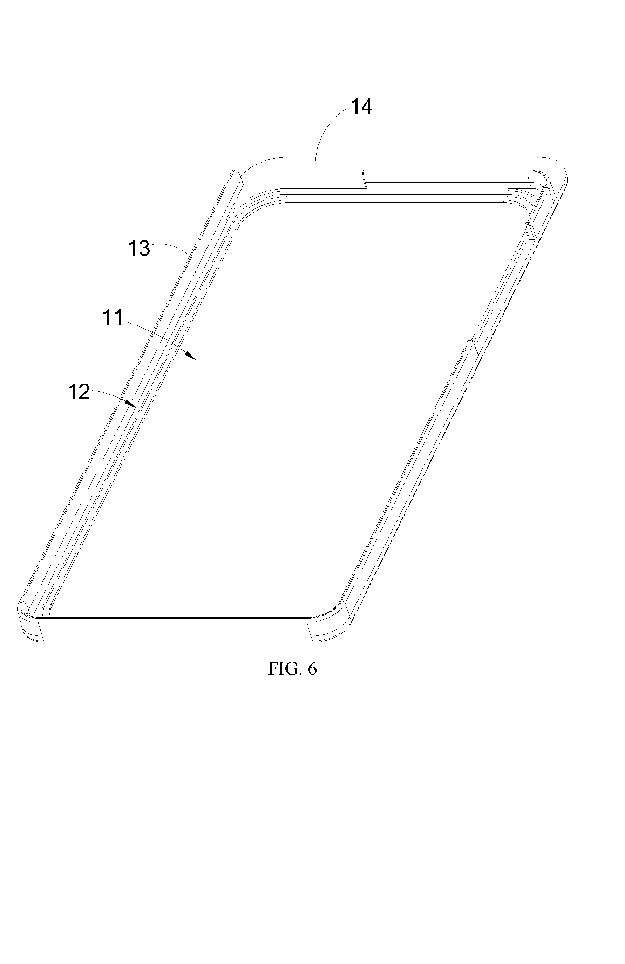

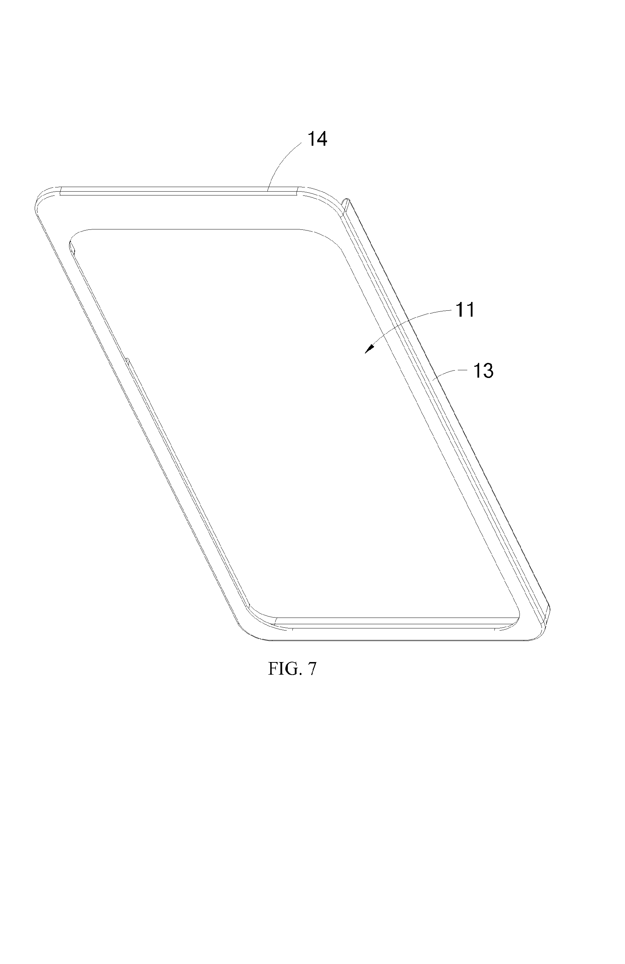

### Referring to FIGS. 1 to 7, the first embodiment of the present invention:

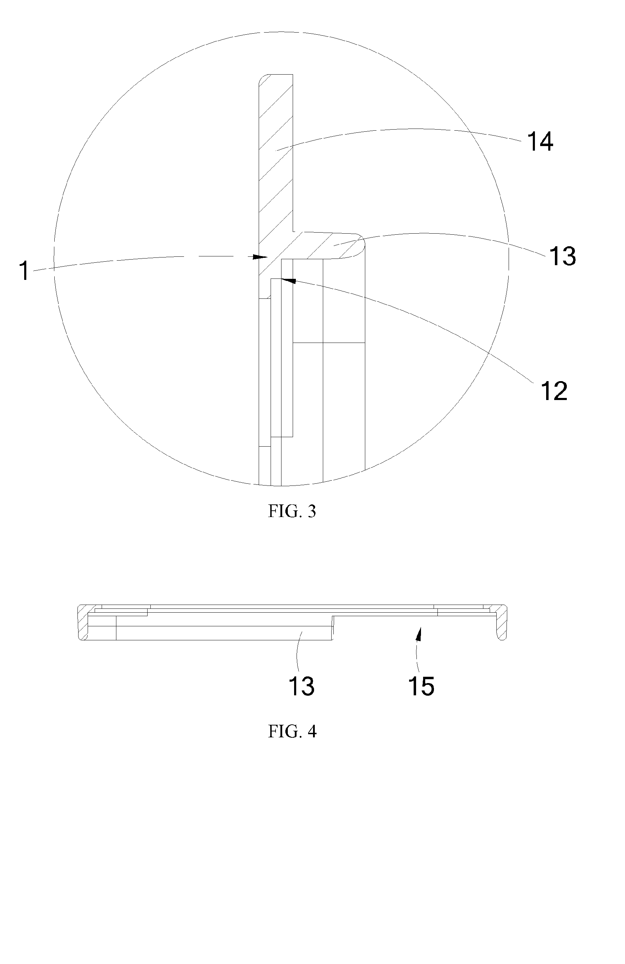

Referring to FIGS. 3, FIG. 5 and FIG. 6, a film sticking device for the tablet electronic equipment includes a board 1, an opening 11 is arranged on the board 1, a protection film is received in the opening, and the size of which is corresponding to the size of the protection film. A recess portion 12 is arranged on the board 1, and the recess portion 12 is engaged with the periphery of the tablet electronic equipment and surrounds the periphery of the opening 11. When the recess portion 12 is engaged with the surface of the electronic equipment to be stuck with a film, the opening 11 is positioned on the surface to be stuck with a film. So the protection film in the opening 11 is positioned on the surface to be stuck with a film.

When sticking the protection film, the tablet electronic equipment is placed on the desktop firstly, the surface of the tablet electronic equipment to be stuck with a film is outwards placed, and the recess portion 12 of the board 1 is engaged with the periphery of the tablet electronic equipment. As long as the protection film is placed in the opening 11, it can be accurately positioned on the surface to be stuck with the film, which facilitates the film sticking, makes the entire film sticking operation more easily, saves a lot of operating time, and can be easily completed by the non-skilled. Only by setting a board 1, arranging the opening 11 on the board 1 being corresponding to the protection film, setting the recess portion 12 surrounding the periphery of the opening 11, and making the recess portion 12 engaging with the periphery of the tablet electronic equipments, so the protection film can be placed on the surface of the tablet electronic equipment to be stuck with the film, which is simple structure, easy manufacturing and low cost.

The recess portion 12 is of staircase structure, the side edges of the tablet electronic equipment and the surface of the tablet electronic equipment to be stuck with the film commonly form a step-shaped structure for matching with the recess portion 12, So as to facilitate the displacement and positioning of the sticking film of the tablet electronic equipment. Further, a rib 13 is projected from the board 1, and the rib 13 is located on a side on which the recess portion 12 is arranged, the rib 13 surrounds the recess portion 12. When the periphery of the tablet electronic equipment is snappingly engaged in the recess portion 12, the rib 13 can clamp the periphery of the tablet electronic equipment, so that the cooperation between the film sticking device and the tablet electronic equipment is more stable and convenient.

Height of the rib 13 is smaller than the thickness of the tablet electronic equipment. Thus, when the recess portion 12 of the board 1 is engaged with the tablet electronic equipment, the rib 13 can not project from the tablet electronic equipment relative to the other side of the surface to be stuck with the film, so that the inner side surface of the opening 11 may be bonded on the periphery of the tablet electronic equipment.

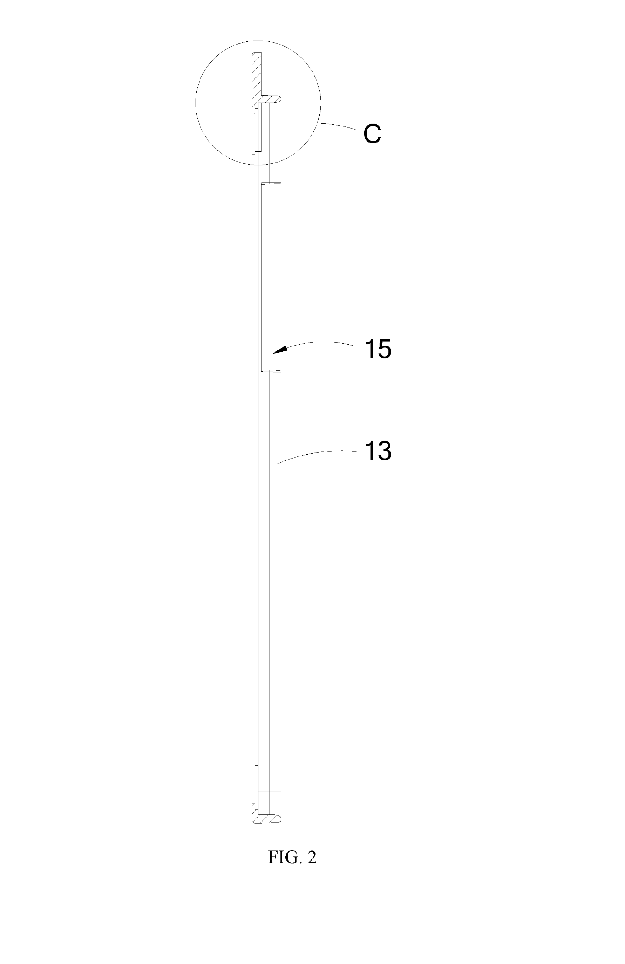

### Referring to FIG. 2 and 4, a gap 15 is arranged on the rib 13 corresponding to the button on the tablet electronic equipment to prevent the rib press the button thereon.

At least one side 14 of the side end corresponding to the opening 11 on the board 1 is greater than the width of other side of the opening 11. To facilitate handling the film sticking device, the board 1 is formed integrally with the rib 13.

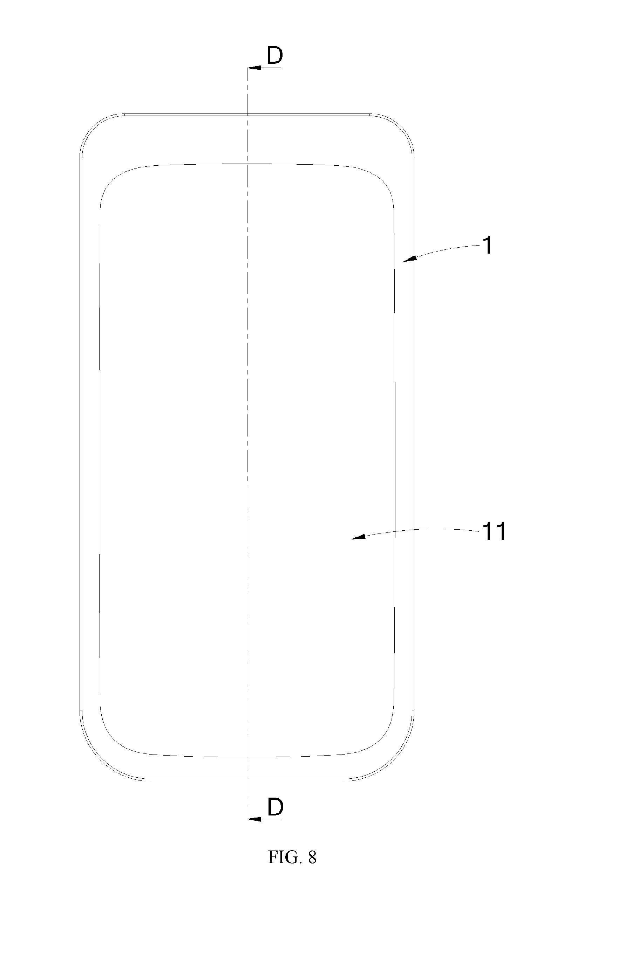

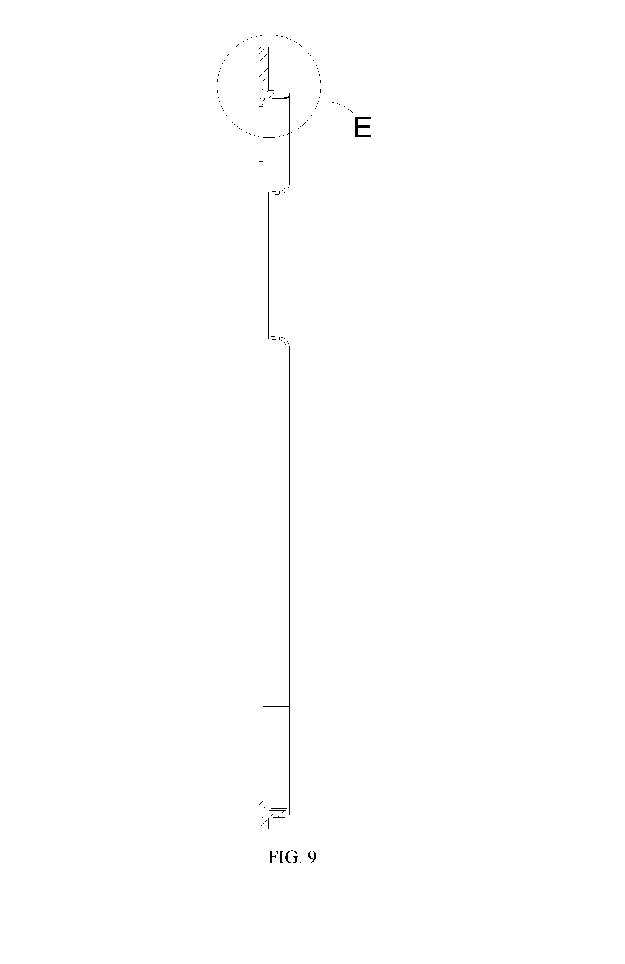

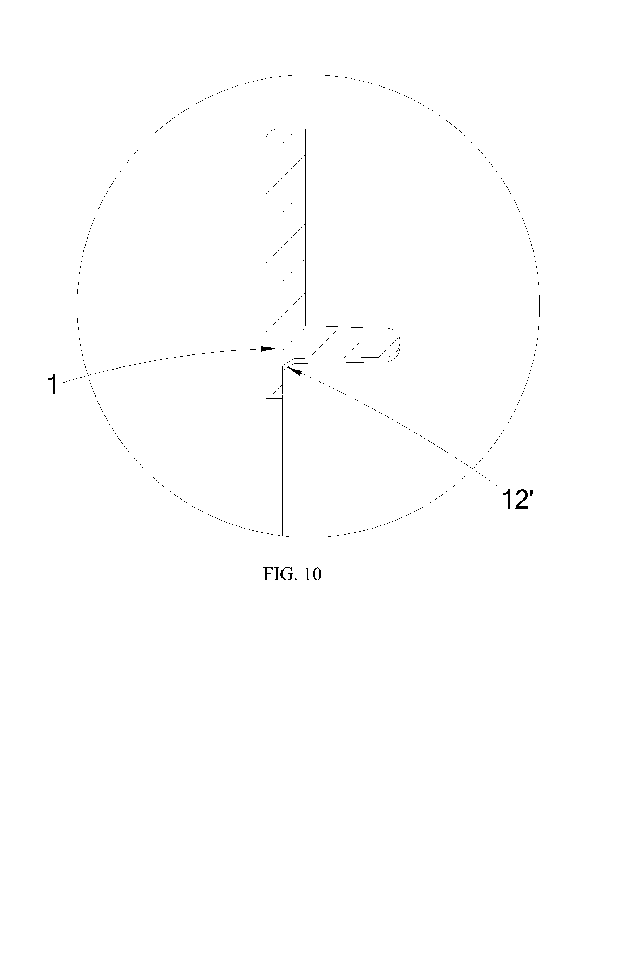

### Referring to FIGS. 8 to 10, the second embodiment of the present invention:

A film sticking device for tablet electronic equipment includes a board 1, an opening 11 being used to the accommodation of the protection film is arranged on the board 1, a recess portion 12' is arranged on the board 1 and surrounds the periphery of the opening 11. The recess portion 12' is bevel structure, which is easy for the import of the periphery of the tablet electronic equipment and the surface to be stuck with the film during the film sticking. In this embodiment, other structure is the similar to the other embodiments, so it is not repeated them here.

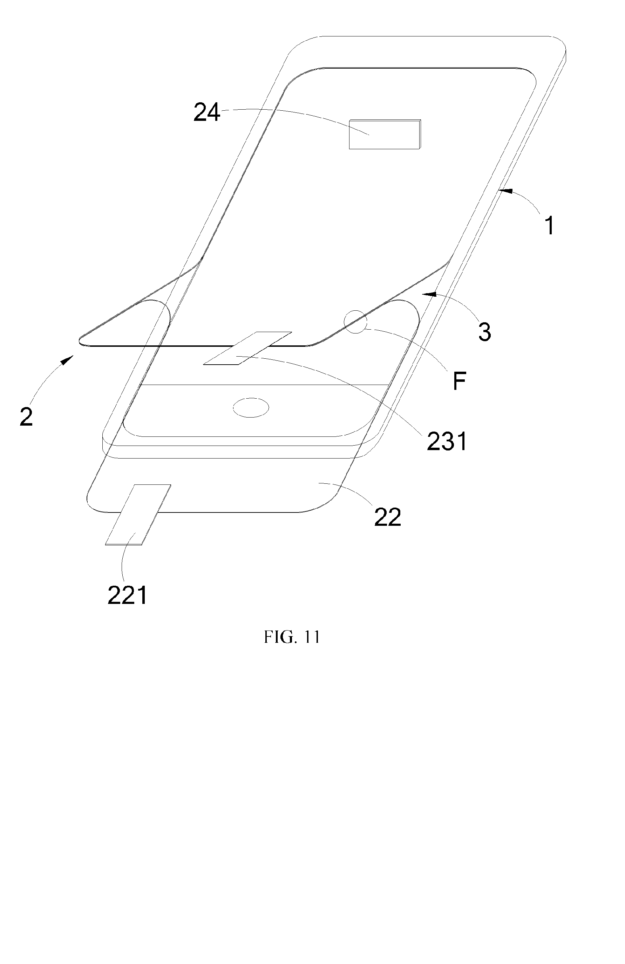

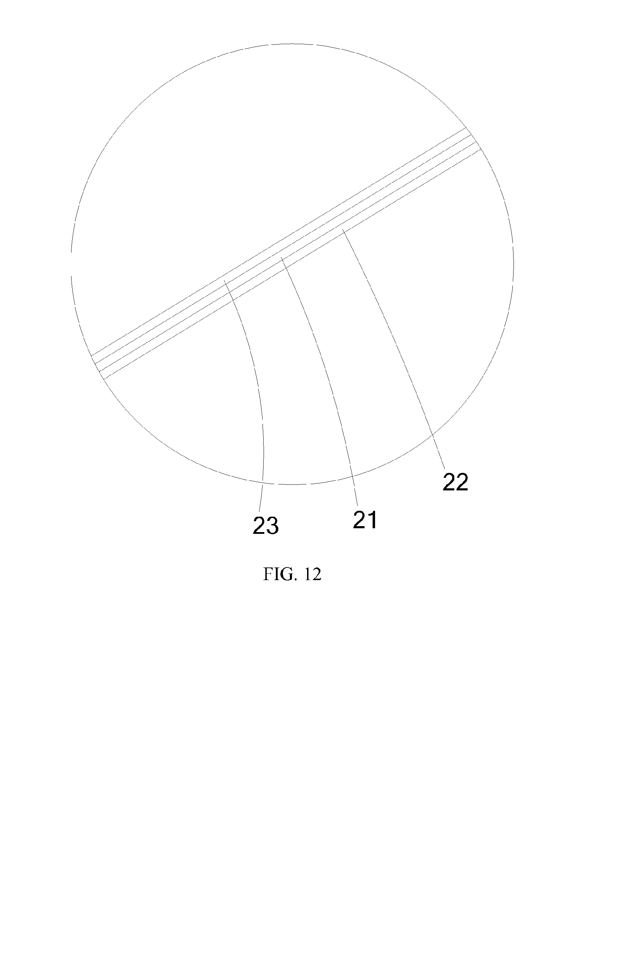

Referring to FIGS. 11 to 12, the protection film 2 includes the fore sticking film and the back sticking film. The fore sticking film is stuck on the screen of the tablet electronic equipment 3 to protect the screen. And the back sticking film is stuck on the back opposite to the screen of the tablet electronic equipment 3.

The protection film 2 includes the protection film 21 stuck on the surface of the tablet electronic equipment 3 to be stuck with the film and the surface film 23 and the inner film 22 stuck on the both side of the protection film 21. The protection film 21 is stuck on the tablet electronic equipment 3 to protect the tablet electronic equipment 3, and the surface film 23 and the inner film 22 is mainly used to protect the protection film 21 before it is stuck. A first hand torn sticker 221 is arranged on the inner film 22, a second hand torn sticker 231 is arranged on the surface film 23. The inner film 22 can be easily torn by the first hand torn sticker 221, so as to stick the protection film 21 on the tablet electronic equipment 3, and then, the surface film 23 can be easily torn by the second hand torn sticker 231.

During the film sticking, a scratch card 24 sometimes is needed. When the protection film 21 is stuck on the tablet electronic equipment 3, the scratch card 24 can be used to get rid of the bubbles between the surface of the tablet electronic equipment 3 to be stuck with the film and the protection film 21, which make the tablet electronic equipment 3 and the protection film 21 fit better.

The present invention includes the following steps:
Putting the tablet electronic equipment 3 on the desktop, and the surface to be stuck with the film faces outwards, (if the surface to be stuck with the film is a screen, the screen faces outwards), also the surface to be stuck with the film is clean.

Snappingly engage the recess portion 12 of the board 1 with the tablet electronic equipment 3.

Tearing a part of the inner film 22 by the first hand torn sticker 221, the side of the exposed portion of the protection film 21 abuts against the inner side of the opening on the board, and is stuck on the surface to be stuck with the film.

Tearing the inner film 22 gradually and sticking the protection film 21 on the surface to be stuck with the film.

Scraping the surface film 23 with the scratch card 24 to get rid of the bubbles between the surfaces of the tablet electronic equipment 3 and the protection film 21.

Tearing the second hand torn sticker 231, and driving the surface film 23 torn from the protection film 21 to complete the film sticking.

When cleaning the surface to be stuck with the film, one can use superfine fiber cloth to wipe, which will not hurt the surface.

The way of the film stick is simple, convenient and easy to be operated.

The embodiments above are merely the preferable embodiments of the present invention and not intended to limit the present invention. And all changes, equivalent substitution and improvements which come within the meaning and range of equivalency of the present invention are intended to be embraced therein.

## Claims

1. A film sticking device for tablet electronic equipments comprises:
a board defining an opening for being used to accommodation of a protection film, a recess portion is arranged on the board around the periphery of the opening, wherein the recess portion is snappingly engaged with the periphery of the tablet electronic equipment so as to position the protection film on the surface of the electronic device to be stuck with the protection film.

2. A film sticking device for tablet electronic equipments as claimed in claim 1, wherein the recess portion is of staircase structure.

3. A film sticking device for tablet electronic equipments as claimed in claim 1, wherein the recess portion is of bevel structure.

4. A film sticking device for tablet electronic equipments as claimed in any of claims 1 to 3, wherein a rib is projected from the board, and the rib surrounds the recess portion, and is used to clamp the periphery of the tablet electronic equipment.

5. A film sticking device for tablet electronic equipments as claimed in claim 4, wherein a gap is arranged on the rib corresponding to a button on the tablet electronic equipment.

6. A film sticking device for tablet electronic equipments as claimed in claim 4, wherein a height of the rib is smaller than a thickness of the tablet electronic device.

7. A film sticking device for tablet electronic equipments as claimed in claim 4, wherein the board is integrally formed with the rib.

8. A film sticking device for tablet electronic equipments as claimed in any of claims 1 to 3, wherein a width of at least one side of a side end on the board corresponding to the opening is greater than a width of other side of the opening.
